# EUROPEAN PATENT APPLICATION

(11) **EP 4 114 025 A1**
(43) Date of publication of application: **04.01.2023**
(21) Application number: 22182424.6
(22) Date of filing: 30.06.2022
(51) Int. Cl.: H04N 21/475, H04N 21/4788

(54) **METHOD FOR SORTING VIDEO BULLET-SCREEN COMMENTS, SERVER, AND STORAGE MEDIUM**

(30) Priority: 01.07.2021 CN 202110750533
(71) Applicant: Beijing Dajia Internet Information Technology Co., Ltd., Beijing 100085 (CN)
(72) Inventor: CHEN, Hao, Haidian District, 100085 (CN)
(74) Representative: Sadler, Peter Frederick

(57) **Abstract**

A method for sorting video bullet-screen comments, a server and storage medium are provided. The method includes: obtaining (S202) sorting data of a bullet-screen comment in a video, the sorting data including playback progress time of the video and sending time of the bullet-screen comment; obtaining (S204) a first sorting score of the bullet-screen comment based on the playback progress time and obtaining a second sorting score of the bullet-screen comment based on the sending time; obtaining (S206) a bullet-screen score based on at least one of the first sorting score and the second sorting score; and determining (S208), based on the bullet-screen score, a sorting result of displaying the bullet-screen comment in the video.

## Description

### TECHNICAL FIELD

The present application relates to the field of video data processing, and in particular to a method for sorting video bullet-screen comments, server and storage medium.

### BACKGROUND

At present, many video sharing websites offer video "bullet screen" (also called barrage, and known as "danmu" in Chinese) feature. Video viewers can post their own comments using this feature while watching the video and the posted comments can be displayed along with the video, for example, as moving messages that move in from one edge of the video screen, across the screen, and move out from another edge of the video screen, such as subtitles sliding in from the left or right side of the video and sliding out from the right or left side, thus increasing the interactivity and fun between viewers.

### SUMMARY

The present disclosure provides a method for sorting video bullet-screen comments, server and storage medium to solve at least the technical problem of the related art that bullet-screen comments cannot be associated with playback progress resulting in untimely display.

According to one aspect of the embodiments of the present disclosure, there is provided a method for sorting video bullet-screen comments. The method includes: obtaining sorting data of a bullet-screen comment in a video, the sorting data comprising playback progress time of the video and sending time of the bullet-screen comment; obtaining a first sorting score of the bullet-screen comment based on the playback progress time and obtaining a second sorting score of the bullet-screen comment based on the sending time; obtaining a bullet-screen score based on at least one of the first sorting score and the second sorting score; and determining, based on the bullet-screen score, a sorting result of displaying the bullet-screen comment in the video.

Optionally, the first sorting score is negatively correlated with the playback progress time and the second sorting score is positively correlated with the sending time of the bullet-screen comment.

Optionally, the bullet-screen score includes a high bit part and a low bit part spliced together. The obtaining the bullet-screen score based on the first sorting score and the second sorting score includes: determining a value of the high bit part of the bullet-screen score based on the first sorting score of the bullet-screen comment and determining a value of the low bit part of the bullet-screen score based on the second sorting score of the bullet-screen comment; and obtaining the bullet-screen score of the bullet-screen comment based on the value of the high bit part and the value of the low bit part.

Optionally, the determining, based on the bullet-screen score, a sorting result of displaying the bullet-screen comment in the video includes: sorting bullet-screen comments in descending order based on first sorting scores of bullet-screen scores, where in response to two or more first sorting scores being equal, the sorting result of displaying the bullet-screen comments in the video is obtained by further sorting bullet-screen comments with an equal first sorting score in descending order according to second sorting scores of the bullet-screen scores.

Optionally, the method further includes: displaying, during playing the video, the bullet-screen comments in the video by selecting the bullet-screen comments in order according to the sorting result.

Optionally, the obtaining a second sorting score of the bullet-screen comment based on the sending time includes: obtaining an auto-increment identifier and sending time of previous bullet-screen comment of target bullet-screen comment, the target bullet-screen comment being the bullet-screen comment for which the bullet-screen score is currently calculated; calculating a duration from the sending time of the previous bullet-screen comment and the sending time of the target bullet-screen comment; determining an auto-increment step based on the duration, the auto-increment step being positively correlated with the duration; generating an auto-increment identifier of the target bullet-screen comment by adding the auto-increment identifier of the previous bullet-screen comment and the auto-increment step; and determining the second sorting score based on the generated auto-increment identifier of the target bullet-screen comment.

Optionally, the determining a sorting result for displaying the bullet-screen comment in the video based on the bullet-screen score includes: sorting, in response to two or more first sorting scores being equal, bullet-screen comments with an equal first sorting score in descending order according to the auto-increment identifier.

According to one aspect of embodiments of the present disclosure, there is provided an apparatus for sorting video bullet-screen comments including: a data obtaining module configured to obtain sorting data of a bullet-screen comment in a video, the sorting data including playback progress time of the video and sending time of the bullet-screen comment; a score calculation module configured to obtain a first sorting score of the bullet-screen comment based on the playback progress time and obtain a second sorting score of the bullet-screen comment based on the sending time; a total score calculation module configured to obtain a bullet-screen score based on at least one of the first sorting score and the second sorting score; and a sorting result module configured to determine, based on the bullet-screen score, a sorting result of displaying the bullet-screen comment in the video.

Optionally, in this apparatus, the first sorting score is negatively correlated with the playback progress time and the second sorting score is positively correlated with the sending time of the bullet-screen comment.

Optionally, in this apparatus, the bullet-screen score includes a high bit part and a low bit part spliced together, and the total score calculation module includes: a high bit unit configured to determine a value of the high bit part of the bullet-screen score based on the first sorting score of the bullet-screen comment; and a low bit unit configured to determine a value of the low bit part of the bullet-screen score based on the second sorting score of the bullet-screen comment. The total score calculation module is further configured to obtain the bullet-screen score of the bullet-screen comment based on the value of the high bit part determined by the high bit unit and the value of the low bit part determined by the low bit unit.

Optionally, in this apparatus, determining, based on the bullet-screen score, a sorting result of displaying the bullet-screen comment in the video, includes: sorting bullet-screen comments in descending order based on first sorting scores of bullet-screen scores, where in response to two or more first sorting scores being equal, the sorting result of displaying the bullet-screen comments in the video is obtained by further sorting bullet-screen comments with an equal first sorting score in descending order according to second sorting scores of the bullet-screen scores.

Optionally, in this apparatus, the apparatus further includes a bullet-screen comment display module configured to display, during playing the video, the bullet-screen comments in the video by selecting the bullet-screen comments in order according to the sorting result.

Optionally, in this apparatus, the score calculation module includes: a sending time determination unit configured to obtain an auto-increment identifier and sending time of previous bullet-screen comment of target bullet-screen comment, the target bullet-screen comment being the bullet-screen comment for which the bullet-screen score is currently calculated; a duration determination unit configured to calculate a duration from the sending time of the previous bullet-screen comment and the sending time of the target bullet-screen comment; a step determination unit configured to determine an auto-increment step based on the duration, the auto-increment step being positively correlated with the duration; an auto-increment identifier generation unit configured to generate an auto-increment identifier of the target bullet-screen comment by adding the auto-increment identifier of the previous bullet-screen comment and the auto-increment step; and a second score calculation unit configured to determine the second sorting score based on the generated auto-increment identifier of the target bullet-screen comment.

Optionally, in this apparatus, determining, based on the bullet-screen score, a sorting result for displaying the bullet-screen comment in the video, includes: sorting, in response to two or more first sorting scores being equal, bullet-screen comments with an equal first sorting score in descending order according to the auto-increment identifier.

According to one aspect of embodiments of the present disclosure, there is further provided a server including at least one processor; and a memory for storing instructions executable by the at least one processor; wherein the at least one processor is configured to execute the instructions to implement the method described in any embodiments of the present disclosure.

According to one aspect of embodiments of the present disclosure, there is further provided a non-transitory computer-readable storage medium that, when instructions in the computer-readable storage medium are executed by a processor of a server, enables the server to perform the method described in any embodiments of the present disclosure.

According to one aspect of embodiments of the present disclosure, there is provided a computer program product including a computer program, where the computer program, when executed by a processor, implements the method described in any embodiments of the present disclosure.

In the solutions of the embodiments of the present disclosure, sorting data of a bullet-screen comment in a video can be obtained, the sorting data including playback progress time of the video and sending time of the bullet-screen comment, and a first sorting score of the bullet-screen comment is obtained based on the playback progress time and a second sorting score of the bullet-screen comment is obtained based on the sending time of the bullet-screen comment. A bullet-screen score can then be obtained based on the first sorting score and the second sorting score, and a sorting result of displaying the bullet-screen comment in the video is determined based on the bullet-screen score. In the solution of this embodiment, the playback order of the bullet-screen comment is correlated with the playback progress of the video and the sending time of the bullet-screen comment, and the bullet-screen score is calculated by the two together to determine the sorting result of displaying the bullet-screen comment in the video, so that the bullet-screen score can be controlled according to the playback progress and the sending time of the bullet-screen comment, and the bullet-screen comment can be displayed in the video according to the playback progress and the sending time of the bullet-screen comment.

It should be understood that the foregoing general description and the following detailed description are exemplary and explanatory only and do not limit the embodiments of the present disclosure.

### BRIEF DESCRIPTION OF THE DRAWINGS

The accompanying drawings herein are incorporated into and form part of this specification, illustrate principles consistent with embodiments of this disclosure, and are used in conjunction with the specification to explain the embodiments of this disclosure and do not constitute an undue limitation of the present disclosure.
FIG. 1 is a schematic diagram of an application environment of a method for sorting video bullet-screen comments illustrated in accordance with some embodiments.
FIG. 2 is a flowchart of a method for sorting video bullet-screen comments illustrated in accordance with some embodiments.
FIG. 3 is a schematic diagram of data structure of a bullet-screen score illustrated in accordance with some embodiments.
FIG. 4 is a flowchart of a method for sorting video bullet-screen comments illustrated in accordance with some embodiments.
FIG. 5 is a flowchart for calculating and obtaining a second sorting score of the bullet-screen comment illustrated in accordance with some embodiments.
FIG. 6 is a block diagram of an apparatus for sorting video bullet-screen comments illustrated in accordance with some embodiments.
FIG. 7 is a block diagram of an apparatus for sorting video bullet-screen comments illustrated in accordance with some embodiments.
FIG. 8 is a block diagram of an apparatus for sorting video bullet-screen comments illustrated in accordance with some embodiments.
FIG. 9 is a block diagram of an apparatus for sorting video bullet-screen comments illustrated in accordance with some embodiments.
FIG. 10 is a diagram of the internal structure of a server illustrated in accordance with some embodiments.

### DETAILED DESCRIPTION

In order to enable a person of ordinary skill in the art to better understand the technical solutions of the present disclosure, the technical solutions in the embodiments of the present disclosure will be clearly and completely described below in conjunction with the accompanying drawings.

It should be noted that the terms "first", "second", etc. in the specification, claims and the above accompanying drawings of the present disclosure are used to distinguish similar objects and need not be used to describe a particular order or sequence. It should be understood that the terms so used may be interchanged, where appropriate, so that embodiments of the present disclosure described herein can be implemented in an order other than those illustrated or described herein. The embodiments described in the following are not intended to represent all embodiments consistent with the present disclosure. Rather, they are only examples of devices and methods that are consistent with some aspects of the present disclosure, as detailed in the appended claims. The terms "include", "comprise" or any other variation thereof is intended to cover non-exclusive inclusion such that a process, method, product, or apparatus including a set of elements includes not only those elements, but also other elements not expressly listed, or also includes elements that are inherent to such process, method, product, or apparatus. Without further limitation, it does not preclude the existence of additional identical or equivalent elements in the process, method, product or apparatus that include those elements. For example, if the words first, second, etc. are used to indicate a name, they do not indicate any particular order.

In some solutions, the comments posted by the viewers are usually sorted according to the sending time of the bullet-screen comments. In the local terminal of the viewer, the viewer can usually see his or her posted comments instantly, but for the terminals of other users who are watching the same video, the bullet-screen comments are usually displayed in sequence according to the sorting order of the bullet-screen comments. In this sorting method, the bullet-screen comments sent by users at a certain time can only be seen by other users after waiting for a certain sorting time, resulting in the latest bullet-screen comments not being displayed in a timely manner, and even causing a serious disconnect between the bullet-screen comments playing and the video content at the moment of sending the bullet-screen comments, reducing the display effect of the bullet-screen comments and affecting the user's experience of using the "bullet screen" feature.

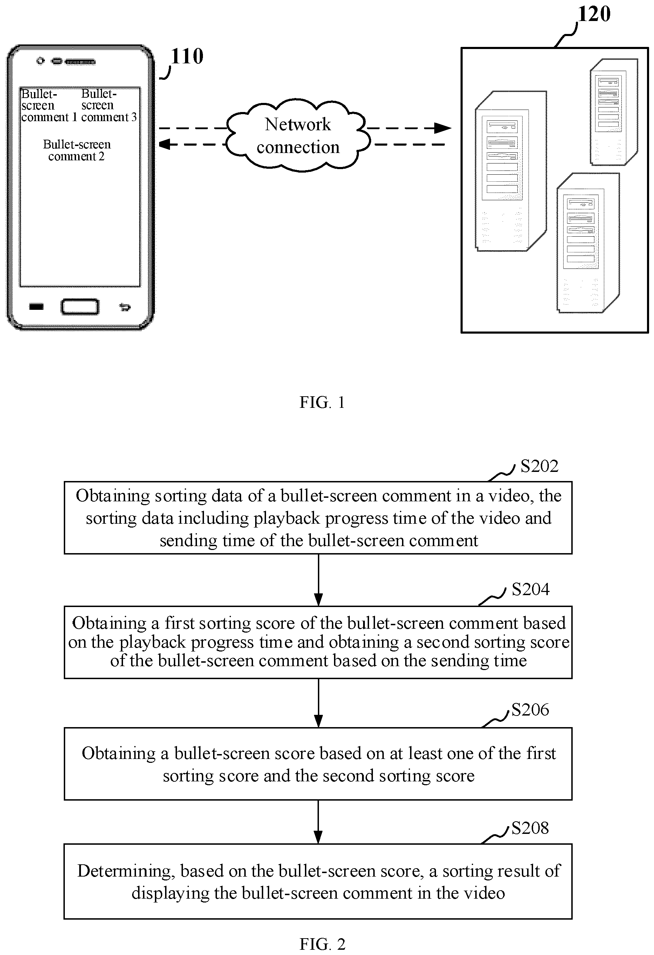

A method for sorting video bullet-screen comments provided by the present disclosure may be applied in an application environment as shown in FIG. 1. A terminal 110 can communicate with a server 120 and receive video data as well as bullet-screen data from the server 120. The terminal 110 may be installed with video playback applications, by which the bullet-screen comments sent by the viewers can be displayed in the video when the video is played. The terminal 110 or the server 120 can obtain the bullet-screen data of the video and use the bullet-screen data to sort. When playing the video, the terminal 110 plays the bullet-screen comments in accordance with the sorting result of the display of the bullet-screen comments. In some application scenarios of the present disclosure, the sorting process of the bullet-screen comments may be processed by the server side, and the server may send the terminal alone or together with the video data after sorting the bullet-screen data. Of course, the present disclosure does not exclude the implementation in which the sorting process using the bullet-screen data is carried out by the terminal side. The terminal 110 described in the embodiments of the present disclosure may include, but is not limited to, various personal computers, laptops, smartphones, tablets, wearable devices, vehicle-mounted devices, medical devices, etc. The server 120 may be a separate server, or a server cluster, a distributed subsystem, a cloud processing platform, a server containing block chain nodes, and a combination thereof, and is not limited to necessarily being a device implemented on the user side.

The solutions of the embodiments of the present disclosure are described below in an implementation scenario in which a server sorts the bullet-screen comments of a video. FIG. 2 is a flowchart of a method for sorting video bullet-screen comments illustrated in accordance with some embodiments. The method may be applied in the terminal 110 and may include the following steps, as shown in FIG. 2.

Step S202, obtaining sorting data of a bullet-screen comment in a video, the sorting data including playback progress time of the video and sending time of the bullet-screen comment.

When a user sends bullet-screen content, the corresponding bullet-screen data (or bullet-screen comments) can be generated. The bullet-screen comment may include the information content about the bullet-screen comment itself, such as the content of bullet-screen comment 1 being "trigger warning". In the embodiments of the present embodiment, the data information related to the bullet-screen comment can also be obtained, such as the playback progress information of the video when the bullet-screen comment is sent, the time when the bullet-screen comment is sent, etc. The playback progress information can indicate the playback progress of the video at the time of sending the bullet-screen comment, which can be collectively referred to as the playback progress time for the sake of description. The playback progress time can be regarded as the length of the played video at the time the bullet-screen comment is sent. For example, the playback progress time of the bullet-screen comment 1 is "00:00:30", which means that the bullet-screen comment is sent when the video has been played for 30 seconds. The sending time of the bullet-screen comment refers to the time corresponding to the bullet-screen comment when the bullet-screen comment is sent. In one embodiment, the timestamp of the bullet-screen comment when the bullet-screen comment is sent can be used as the sending time of the bullet-screen comment. The sending time of the bullet-screen comment can be relative to the time information of the video, and the precise sending time can be the same as the playback progress time or different. For example, when the accuracy of the sending time of the bullet-screen comment is in milliseconds, the timestamp of bullet-screen comment 2 sent when the playback progress time is "00:00:30" is "00:00:30:40", and the timestamp of bullet-screen comment 3 is "00: 00:30:50", that is, the sending time of the bullet-screen comment 2 and bullet-screen comment 3 is "00:00:30:40" and "00:00:30:50" respectively.

Of course, in other implementations of the present disclosure, the feature data characterizing the sending time of the bullet-screen comment may be obtained based on other processing of the sending time of the bullet-screen comment, such as converting the sending time of the bullet-screen comment into feature data such as an identifier to distinguish different sending time of sending the bullet-screen comments according to the sending time of the bullet-screen comment, and similar implementations also belong to the embodiments of the present disclosure.

Step S204, obtaining a first sorting score of the bullet-screen comment based on the playback progress time and obtaining a second sorting score of the bullet-screen comment based on the sending time.

In this embodiment, the first sorting score and the second sorting score of the bullet-screen comment can be obtained by calculating based on the playback progress time and the sending time of the bullet-screen comment, respectively. The first sorting score is associated with the playback progress of the video, while the second sorting score is associated with the sending time of the bullet-screen comment, so that the sorting of bullet-screen comments can be separated into two dimensional parts for representation, which is conducive to controlling the sorting result of the bullet-screen comments from different dimensions respectively. The specific first sorting score and the second sorting score may be calculated and obtained according to the playback progress time or the sending time of the bullet-screen comment according to the predefined processing, or the first sorting score can be represented directly using the playback progress time and the second sorting score can be represented directly using the sending time of the bullet-screen comment, or the first sorting score or the second sorting score can be represented by converting the playback progress time or the sending time of the bullet-screen comment into a data format such as binary.

Step S206, obtaining a bullet-screen score based on at least one of the first sorting score and the second sorting score.

After calculating and obtaining the first sorting score and the second sorting score, the bullet-screen score can be obtained based on at least one of the first sorting score and the second sorting score. In this embodiment, there is no limitation on how to calculate to obtain the bullet-screen score based on at least one of the first sorting score and the second sorting score, and any implementation in which the bullet-screen score of the bullet-screen comment is calculated using at least one of the first sorting score and the second sorting score falls within the scope of the embodiments of the present disclosure. For example, different weights can be set for the first sorting score and the second sorting score, and the weighted scores calculated according to the weights are further processed to obtain the bullet-screen score, e.g., adding up the weighted scores, or combining or splicing the weighted scores using a preset method. For another example, some machine learning algorithms, artificial intelligence algorithms, neural network models, etc. can be used to take the first sorting score and the second sorting score as input, and then output the bullet-screen score. In this way, each bullet-screen comment may have corresponding first sorting score and second sorting score, as well as a corresponding bullet-screen score.

It should be noted that the bullet-screen score described in the embodiments of the present disclosure may include a numerical score expressed in decimal, binary, etc., such as 89, 92, 10010101, etc., and may also be in other data formats expressed using letters, symbols, etc., such as the bullet-screen score may be AA, AB, or A10, B08, etc., which may indicate the size of the bullet-screen score value according to alphabetical order, numerical size, etc. For example, the value of the bullet-screen score AA is greater than the value of the bullet-screen score AB, and the value of the bullet-screen score A10 is greater than the value of the bullet-screen score B08. The bullet-screen score may also be in the data format that includes other settings.

Step S208, determining, based on the bullet-screen score, a sorting result of displaying the bullet-screen comment in the video.

In this embodiment of the present disclosure, the sorting result of displaying the bullet-screen comment in the video can be determined based on the bullet-screen score. The sorting result may represent the order in which the bullet-screen is played in the video, may be sorting data redetermined based on the bullet-screen score, or may be the bullet-screen score itself. For example, a string "score" may be used to represent the bullet-screen score, which may be specifically obtained based on the first sorting score and second sorting score in a predetermined manner or algorithm. The size of the bullet-screen score itself can reflect the priority of the bullet-screen's playback in the video, e.g., the larger the score is, the higher the playback order will be. For example, a bullet-screen comment with a "score" of 90 will be displayed in the video before that with a "score" of 89. It can be understood that the solutions of this embodiment can be achieved to correlate the bullet-screen score with two dimensions, i.e., the playback progress of the video and the sending time of the bullet-screen comment, and then the sorting result of displaying the bullet-screen comment can be determined according to the bullet-screen score. After the sorting result of displaying the bullet-screen comment is determined, the server can store the sorting result, such as the score of each bullet-screen comment, and this process is not limited to necessarily include the sorting process or the processing of displaying the bullet-screen comment in the video. As in some implementation scenarios, the server may store the calculated bullet-screen score of each bullet-screen, and set the bullet-screen score to represent the sorting result of displaying the bullet-screen comment.

In the solutions of this embodiment of the present disclosure, the playback order of the bullet-screen comment is associated with the playback progress of the video and the sending time of the bullet-screen comment, and the bullet-screen score is calculated by the two together to determine the sorting result of displaying the bullet-screen comment in the video, so as to realize the control of the bullet-screen score according to the playback progress and the sending time of the bullet-screen comment, which can make the bullet-screen comment be displayed in the video according to the playback progress and the sending time.

In some embodiments of the present disclosure, the first sorting score and the second sorting score can be calculated and obtained based on the playback progress time and the sending time of the bullet-screen comment respectively, and then the bullet-screen score can be calculated based on the first sorting score and the second sorting score, so that the sorting result of displaying the bullet-screen comment can be determined based on the bullet-screen score. Therefore, the different calculation/processing methods of the bullet-screen score affect the sorting result. In one implementation provided by the present disclosure, the first sorting score is negatively correlated with the playback progress time, and the second sorting score is positively correlated with sending time of the bullet-screen comment. In this way, in this embodiment of the present disclosure, there is not only a correlation between the bullet-screen score and the playback progress time and the sending time of the bullet-screen comment, but also calculation relationships between the playback progress time and the corresponding score and between the sending time of the bullet-screen comment and the corresponding score. Generally, each bullet-screen comment has its corresponding playback progress time when it is sent. In the solutions of this embodiment, when the bullet-screen comments are displayed continuously, the bullet-screen comment with the higher playback progress is more forward in the sorting, thus the priority of this bullet-screen comment should be higher in order to ensure the timeliness of the bullet-screen comments. Therefore, the first sorting score is set in this embodiment to be negatively correlated with the playback progress, i. e. the smaller the play progress time is, the higher the first sorting score will be, and if only the playback progress is considered, the higher the display priority will be; correspondingly, the larger the playback progress time is, the lower the first sorting score will be. Similarly, the second sorting score is positively correlated with the sending time of the bullet-screen comment, i.e., the later the bullet-screen comment is sent (the later the sending time is, the larger the corresponding time value is), the higher the second sorting score will be, further, considering only the sending time of the bullet-screen comment (or the same playback progress), the later the bullet-screen comment is sent, the higher the display priority will be, i.e., newly posted bullet-screen comment will be displayed first.

As previously described, the different calculation/processing methods of the bullet-screen score affect the sorting result. In some other implementations provided by the present disclosure, the bullet-screen score includes a high bit part and a low bit part spliced together, said obtaining a bullet-screen score based on the first sorting score and the second sorting score includes: determining a value of the high bit part of the bullet-screen score based on the first sorting score of the bullet-screen comment and determining a value of the low bit part of the bullet-screen score based on the second sorting score of the bullet-screen comment; and obtaining the bullet-screen score of the bullet-screen comment based on the value of the high bit part and the value of the low bit part.

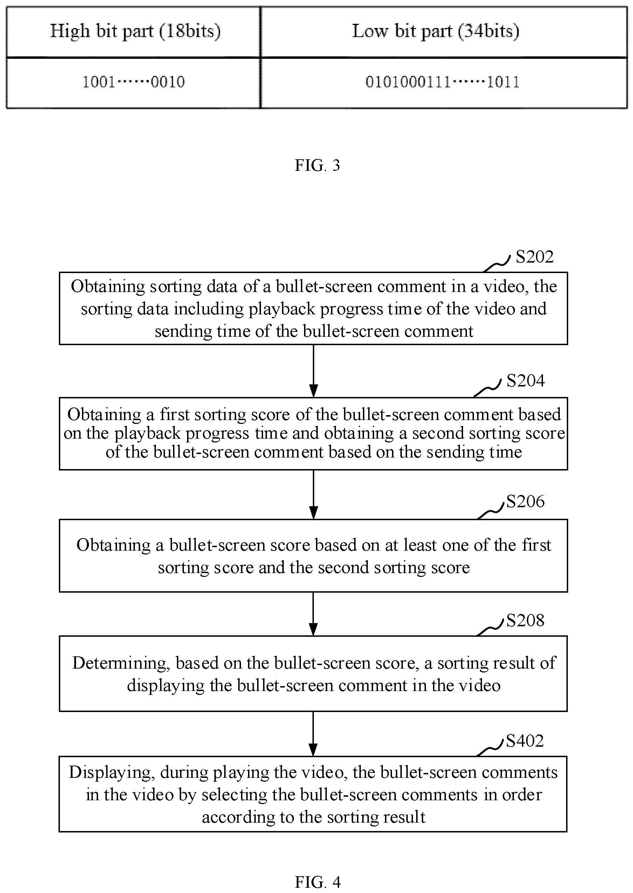

In this embodiment, the bullet-screen score may include two parts, a high bit part and a low bit part, and the bullet-screen score may be composed of the high bit part and the low bit part spliced together. The high bit part and low bit part usually refer to the different weight components formed by dividing the weights of respective characters or bits in the composition of the bullet-screen score. Usually the high bit part is on the left side of the whole data structure of the bullet-screen score, and the low bit part is on the right side of the whole data structure of the bullet-screen score, which is not limited in the present disclosure, and can be set according to the specific data storage method. For example, as shown in FIG. 3, a 52-bit double type (double precision floating point type) "score" can be used to represent the bullet-screen score, where the first 18 bits (high bit part) store the first sorting score obtained based on the playback progress time, with a capacity of 2^18 - 1 seconds timestamp of the playback progress, which can hold 72 hours of playback progress (2^18s is about 72 hours). The last 34 bits (the low bit part) stores the second sorting score obtained based on the sending time of the bullet-screen comment, and the 34 bits can hold a maximum of 17.1 billion bullet-screen comments (2^34 - 1 is about 17.1 billion). The entire 52-bit "score" is used to represent the bullet-screen score. The data structure of the bullet-screen score of this embodiment is that: a high bit part of a bullet-screen score has a higher weight, and according to the sorting result, the bullet-screen comment will be displayed based on the playback progress in priority; when the playback progress time of bullet-screen comments is the same (the high bit part is the same), these bullet-screen comments are displayed further according to the score of the sending time, so that among the bullet-screen comments corresponding the same playback progress, the bullet-screen comment with higher second sorting score will be ahead of others.

In some other embodiments of the present disclosure, said determining, based on the bullet-screen score, a sorting result of displaying the bullet-screen comment in the video includes: sorting bullet-screen comments in descending order based on first sorting scores of bullet-screen scores. In response to two or more first sorting scores being equal, the sorting result of displaying the bullet-screen comments in the video is obtained by further sorting bullet-screen comments with an equal first sorting score in descending order according to second sorting scores of the bullet-screen scores.

In this embodiment, the sorting result of bullet-screen comments is that the bullet-screen comments are sorted in descending order according to the playback progress of the video in priority. When the playback progress is equal, the bullet-screen comments with the same first sorting score are further sorted in descending order according to the sending time of the bullet-screen comments, so that the sorting result of displaying the bullet-screen comments in the video is obtained. For example, in some embodiments, the larger the first sorting score is, the more forward the bullet-screen comment will be in the display of the sorting result, and among the bullet-screen comments with the same first sorting score, a bullet-screen comment with a larger second sorting score is more forward. If combined with some of the aforementioned implementations, the smaller the playback progress time is, the higher the first sorting score will be, the larger the corresponding bullet-screen score will be, the larger the overall bullet-screen score will be, and the higher the priority of the bullet-screen comment playback will be. When the playback progress is equal, for example, among the bullet-screen comments with an equal first sorting score of the high 18 bits, a bullet-screen comment with a later sending time has a higher second sorting score, that is, when the bullet-screen comments have the same playback progress, the later the bullet-screen comment is sent, the more forward it will be. In this way, the bullet-screen comments can be displayed according to the playback progress in priority, and when the playback progress is the same, the newly posted bullet-screen comments can be displayed in time (the second sorting score is relatively large).

FIG. 4 is a flowchart of a method for sorting video bullet-screen comments illustrated in accordance with some embodiments. As shown in FIG. 4, after obtaining the sorting result of displaying the bullet-screen comments in the video, the method further includes: S402, displaying, during playing the video, the bullet-screen comments in the video by selecting the bullet-screen comments in order according to the sorting result.

After determining the sorting result of displaying the bullet-screen comments, if the video is played at the terminal, the bullet-screen comments can be selected for display in order according to the size of the bullet-screen score in the sorting result.

The display described here may be a display performed by the processing equipment that sorts the video bullet-screen comments, or may be a display performed by a terminal after the bullet-screen comment to be displayed is selected and sent to the terminal. In this way, the bullet-screen comments in the video played by the terminal will be displayed according to the playback progress in priority, and when the playback progress is the same, the newly posted bullet-screen comments can be displayed in time (the second sorting score is relatively large) to improve the user viewing and interaction experience.

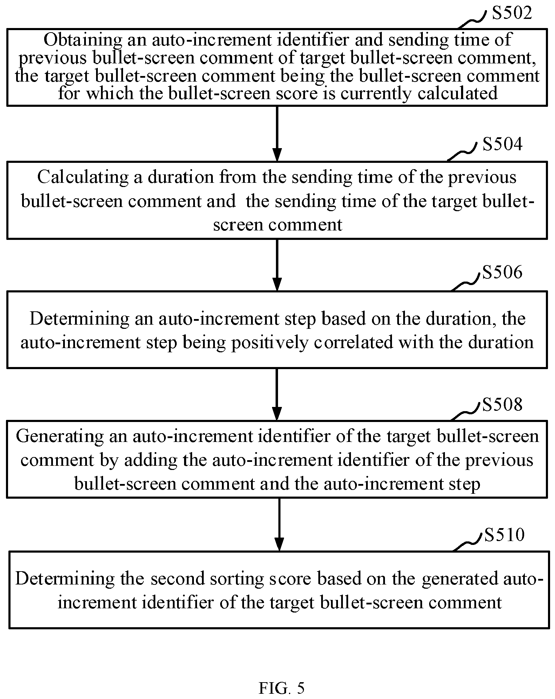

FIG. 5 is a flowchart for calculating and obtaining a second sorting score of the bullet-screen comment illustrated in accordance with some embodiments. As shown in FIG. 5, said obtaining a second sorting score of the bullet-screen comment based on the sending time of the bullet-screen comment, includes the following steps.

S502, obtaining an auto-increment identifier and sending time of previous bullet-screen comment of target bullet-screen comment, the target bullet-screen comment being the bullet-screen comment for which the bullet-screen score is currently calculated.

S504, calculating a duration from the sending time of the previous bullet-screen comment and the sending time of the target bullet-screen comment.

S506, determining an auto-increment step based on the duration, the auto-increment step being positively correlated with the duration.

S508, generating an auto-increment identifier of the target bullet-screen comment by adding the auto-increment identifier of the previous bullet-screen comment and the auto-increment step.

S510, determining the second sorting score based on the generated auto-increment identifier of the target bullet-screen comment.

The implementation, provided by the present disclosure for obtaining the second sorting score of the bullet-screen comment, can set an auto-increment identifier (an auto-increment ID, unique identification) for the bullet-screen comment, in which the sending time of the bullet-screen can be used as the auto-increment ID, or the auto-increment ID can be generated after some processing based on the sending time of the bullet-screen comment. The auto-increment ID is usually increased according to the time sequence of the sending time of the bullet-screen comment, i.e., the later the sending time is, the larger the self-increasing ID is. In the embodiments of the present disclosure, the time interval between the current bullet-screen comment and the previous bullet-screen comment can be calculated, and the auto-increment step of the auto-increment ID can be determined based on the time interval. After the auto-increment step is obtained, the auto-increment ID of the current bullet-screen comment can be obtained based on the previous auto-increment ID. Usually, the later the bullet-screen comment is sent, the larger the auto-increment ID will be, and the higher the second sorting score will be. In the embodiments of the present disclosure, the auto-increment identifier of the bullet-screen comment is obtained based on the sending time of the bullet-screen comment, and the auto-increment identifier is generated by the auto-increment method. The use of a unique auto-increment ID instead of the traditional way of generating a unique identification based on the sending timestamp can effectively solve the problem of duplicate bullet-screen comments with the same sending timestamp, which affects the sorting process, making the sorting efficiency higher and the sorting results more reliable.

Similarly, in the sorting result for displaying the bullet-screen comment, said determining, based on the bullet-screen score, a sorting result for displaying the bullet-screen comment in the video, includes: sorting, in response to two or more first sorting scores being equal, bullet-screen comments with an equal first sorting score in descending order according to the auto-increment identifier. In this way, the sorting result for displaying the bullet-screen comment also avoids the problem of duplicate bullet-screen comments caused by the same sending timestamp which affects the sorting process, making the sorting more efficient and the sorting result more reliable.

It will be understood that each embodiment of the method described above is described in this specification in a progressive manner. The same/similar parts between the embodiments are referred to each other, each embodiment focuses on the differences from the other embodiments, and related aspects can be found in the descriptions of other method embodiments.

It should be understood that although the individual steps in the flowcharts involved in the accompanying drawings are shown in the order indicated by the arrows, the steps are not necessarily performed in the order indicated by the arrows. Except as expressly stated herein, there is no strict sequential limitation on the execution of these steps, and the steps may be performed in other orders. Moreover, at least some of the steps in FIGS. 2-6 may include multiple steps or phases that are not necessarily performed at the same time, but may be performed at different times, and the order in which these steps or phases are performed is not necessarily sequential, but may be performed alternately or alternately with other steps or at least portions of steps or phases of other steps.

Based on the description of the embodiments of the method for sorting video bullet-screen comments described above, the present disclosure also provides an apparatus for sorting video bullet-screen comments. The apparatus may include a system (including a distributed system), software (application), module, component, server, client, etc. that uses the method described in the embodiments of the present specification and incorporates the necessary implementation hardware. Based on the same innovative idea, the apparatus in one or more embodiments provided by embodiments of the present disclosure is as described in the following embodiments. Since the implementation of the apparatus to solve the problem is similar to the method, the implementation of the specific apparatus of the embodiments of this specification can be seen in the implementation of the aforementioned method and will not be repeated. As used below, the term "unit" or "module" may be a combination of software and/or hardware that implements a predetermined function. Although the apparatus described in the following embodiments are preferably implemented in software, implementations of hardware, or combinations of software and hardware, are also possible and contemplated.

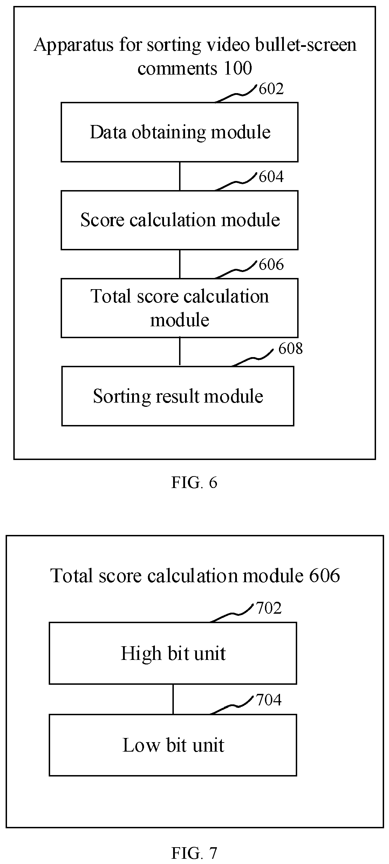

FIG. 6 is a block diagram of an apparatus for sorting video bullet-screen comments illustrated in accordance with some embodiments. The apparatus may be a terminal 110 as previously described, or may be a server 120, with specific reference to FIG. 6, the apparatus 100 may include a data obtaining module 602 configured to obtain sorting data of a bullet-screen comment in a video, the sorting data comprising playback progress time of the video and sending time of the bullet-screen comment; a score calculation module 604 configured to obtain a first sorting score of the bullet-screen comment based on the playback progress time and a second sorting score of the bullet-screen comment based on the sending time; a total score calculation module 606 configured to obtain a bullet-screen score based on at least one of the first sorting score and the second sorting score; and a sorting result module 608 configured to determine, based on the bullet-screen score, a sorting result of displaying the bullet-screen comment in the video.

Based on the foregoing description of method embodiments, in another embodiment of the apparatus provided by the present disclosure, the first sorting score is negatively correlated with the playback progress time and the second sorting score is positively correlated with the sending time of the bullet-screen comment.

FIG. 7 is a block diagram of a structure of the total score calculation module 606 in an apparatus for sorting video bullet-screen comments illustrated in accordance with some embodiments. Referring to FIG. 7, the bullet-screen score of the total score calculation module 606 includes a high bit part and a low bit part spliced together, and the total score calculation module 606 may include: a high bit unit 702 configured to determine a value of the high bit part of the bullet-screen score based on the first sorting score of the bullet-screen comment; and a low bit unit 704 configured to determine a value of the low bit part of the bullet-screen score based on the second sorting score of the bullet-screen comment. The total score calculation module 606 is further configured to obtain the bullet-screen score of the bullet-screen comment based on the value of the high bit part determined by the high bit unit 702 and the value of the low bit part determined by the low bit unit 704.

Based on the foregoing description of method embodiments, in another embodiment of the apparatus provided by the present disclosure, determining, based on the bullet-screen score, a sorting result of displaying the bullet-screen comment in the video, includes: sorting bullet-screen comments in descending order based on first sorting scores of bullet-screen scores, wherein in response to two or more first sorting scores being equal, the sorting result of displaying the bullet-screen comments in the video is obtained by further sorting bullet-screen comments with an equal first sorting score in descending order according to second sorting scores of the bullet-screen scores.

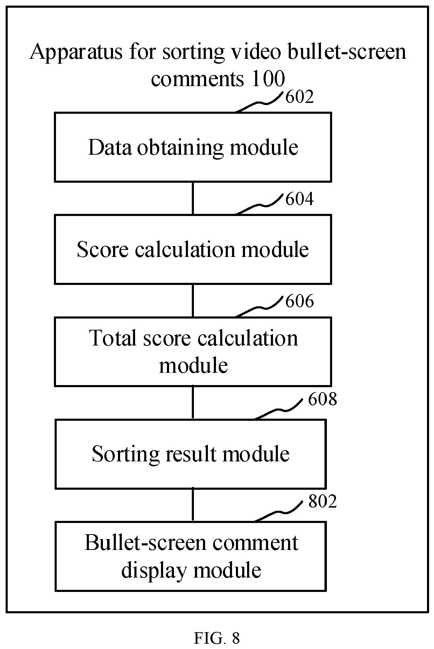

FIG. 8 is a block diagram of an apparatus for sorting video bullet-screen comments illustrated in accordance with some embodiments. Referring to FIG. 8, the apparatus further includes a bullet-screen comment display module 802 configured to display, during playing the video, the bullet-screen comments in the video by selecting the bullet-screen comments in order according to the sorting result.

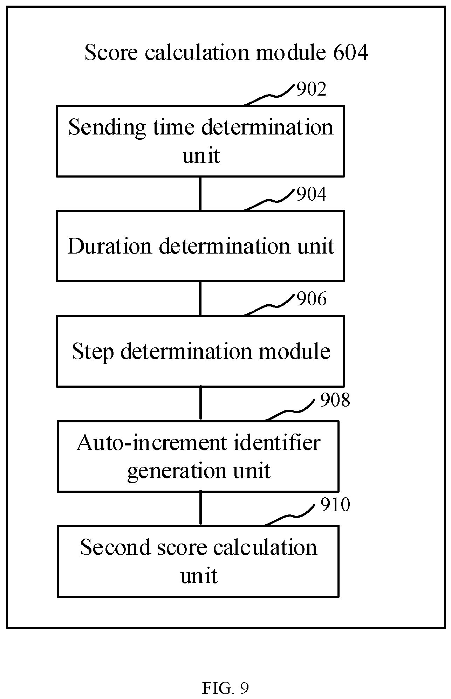

FIG. 9 is a block diagram of a structure of the score calculation module 604 in an apparatus for sorting video bullet-screen comments illustrated in accordance with some embodiments. Referring to FIG. 9, the score calculation module 604 includes a sending time determination unit 902 configured to obtain an auto-increment identifier and sending time of previous bullet-screen comment of target bullet-screen comment, the target bullet-screen comment being the bullet-screen comment for which the bullet-screen score is currently calculated; a duration determination unit 904 configured to calculate a duration from the sending time of the previous bullet-screen comment and the sending time of the target bullet-screen comment; a step determination unit 906 configured to determine an auto-increment step based on the duration, the auto-increment step being positively correlated with the duration; an auto-increment identifier generation unit 908 configured to generate an auto-increment identifier of the target bullet-screen comment by adding the auto-increment identifier of the previous bullet-screen comment and the auto-increment step; and a second score calculation unit 910 configured to determine the second sorting score based on the generated auto-increment identifier of the target bullet-screen comment.

Based on the foregoing description of method embodiments, in another embodiment of the apparatus provided by the present disclosure, determining, based on the bullet-screen score, a sorting result for displaying the bullet-screen comment in the video, includes: sorting, in response to two or more first sorting scores being equal, bullet-screen comments with an equal first sorting score in descending order according to the auto-increment identifier.

Regarding the apparatus in the above embodiment, the specific way in which each module performs its operation has been described in detail in the embodiment concerning the method, and will not be described in detail here.

In some embodiments, there is also provided a computer program product including a computer program, the computer program when executed by a processor implementing the method for sorting video bullet-screen comments described in any one of this specification.

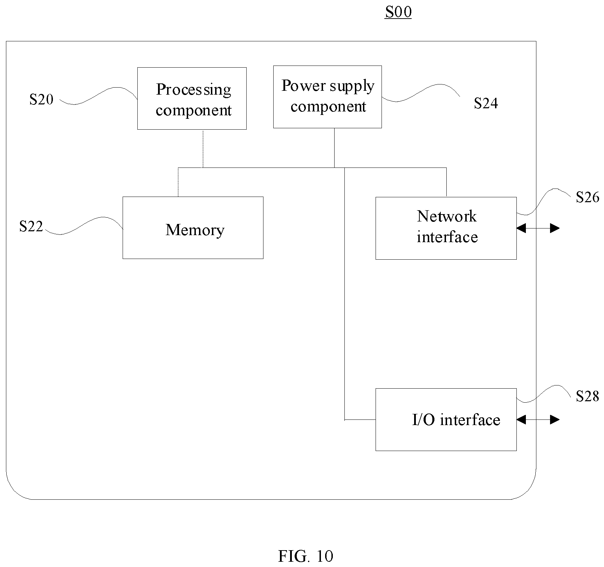

FIG. 10 is a block diagram of a device S00 for sorting video bullet-screen comments illustrated in accordance with some embodiments, and the device S00 may be a server, a server cluster, a distributed processing server, a blockchain server, a cloud computing platform, and the like, as previously described, and combinations thereof. For example, device S00 may be a combination of one or more servers. Referring to FIG. 10, the device S00 includes a processing component S20, which further includes one or more processors, and a memory resource represented by a memory S22 for storing instructions, such as an application, that may be executed by the processing component S20. The application programs stored in memory S22 may include one or more modules each corresponding to a set of instructions. In addition, the processing component S20 is configured to execute the instructions to perform the method described above that can be implemented on the proxy server side.

The device S00 may also include a power supply component S24 configured to perform power management of device S00, a wired or wireless network interface S26 configured to connect device S00 to a network, and an input-output (I/O) interface S28. The device S00 may operate an operating system based on an operating system stored in memory S22, such as Window12 12erver Mac 012 X, Unix, Linux, FreeB12D, or the like.

In some embodiments, there is also provided a non-transitory computer-readable storage medium including instructions, such as the memory S22 including instructions, the instructions being executable by the processing component S20 of the device S00 to accomplish the method described above. The memory medium may be a computer-readable storage medium, for example, the computer-readable storage medium may be ROM, random access memory (RAM), CD-ROM, magnetic tape, floppy disk, and optical data storage device, among others.

In the solutions of the embodiments of the present disclosure, sorting data of a bullet-screen comment in a video can be obtained, the sorting data including playback progress time of the video and sending time of the bullet-screen comment, and a first sorting score of the bullet-screen comment is obtained based on the playback progress time and a second sorting score of the bullet-screen comment is obtained based on the sending time of the bullet-screen comment. A bullet-screen score can then be obtained based on the first sorting score and the second sorting score, and a sorting result of displaying the bullet-screen comment in the video is determined based on the bullet-screen score. In the solution of this embodiment, the playback order of the bullet-screen comment is correlated with the playback progress of the video and the sending time of the bullet-screen comment, and the bullet-screen score is calculated by the two together to determine the sorting result of displaying the bullet-screen comment in the video, so that the bullet-screen score can be controlled according to the playback progress and the sending time of the bullet-screen comment, and the bullet-screen comment can be displayed in the video according to the playback progress and the sending time of the bullet-screen comment.

Each embodiment in this specification is described in a progressive manner, and the same or similar parts between the embodiments can be referred to each other, with each embodiment focusing on the differences from the other embodiments. In particular, for the embodiments of hardware combined with procedure, the description is relatively simple because it is basically similar to the method embodiments, and the relevant parts can be found in the method embodiments.

It should be noted that the above described apparatus, device, server, etc. may also include other implementations according to the description of the method embodiments, and the specific implementations can be referred to the description of the relevant method embodiments. In addition, new implementations consisting of mutual combinations of features between each method and apparatus, device, and server implementations still fall within the scope of implementations covered by the present disclosure, and will not be repeated here.

For the convenience of description, the above apparatus is described in terms of functions divided into various modules described separately. Of course, the implementations of one or more apparatuses of this specification can be performed by implementing the functions of each module in the same or multiple software and/or hardware, or by implementing the same function in multiple sub-modules or subunits, etc. The above described embodiments of the apparatus are only schematic, for example, the division of modules or units, which is only a logical functional division, can be divided in another way when actually implemented, for example, multiple units or components can be combined or can be integrated into another system, or some features can be ignored, or not implemented. Another point is that the coupling, communication connections, etc. between the apparatuses or units shown or described can be implemented directly and/or indirectly coupled/connected, either electrically, mechanically, or otherwise, through some standard or custom interfaces, protocols, etc.

Other embodiments of the present disclosure will readily come to the mind of one skilled in the art upon consideration of the specification and practice of the invention disclosed herein. This disclosure is intended to cover any variation, use, or adaptation of the present disclosure that follows the general principles of the present disclosure and includes commonly known or customary technical means in the art that are not disclosed herein. The specification and embodiments are to be considered exemplary only, and the true scope of the present disclosure is indicated by the following claims.

It should be understood that the present disclosure is not limited to the precise structure already described above and illustrated in the accompanying drawings, and that various modifications and changes may be made without departing from its scope.

## Claims

1. A method for sorting video bullet-screen comments, the method comprising:
obtaining (S202) sorting data of a bullet-screen comment in a video, the sorting data comprising playback progress time of the video and sending time of the bullet-screen comment;
obtaining (S204) a first sorting score of the bullet-screen comment based on the playback progress time and obtaining a second sorting score of the bullet-screen comment based on the sending time;
obtaining (S206) a bullet-screen score based on at least one of the first sorting score and the second sorting score; and
determining (S208), based on the bullet-screen score, a sorting result of displaying the bullet-screen comment in the video.

2. The method of claim 1, wherein the first sorting score is negatively correlated with the playback progress time and the second sorting score is positively correlated with the sending time of the bullet-screen comment.

3. The method of claim 1 or claim 2, wherein the bullet-screen score comprises a high bit part and a low bit part spliced together, and said obtaining the bullet-screen score based on the first sorting score and the second sorting score comprises:
determining a value of the high bit part of the bullet-screen score based on the first sorting score of the bullet-screen comment and determining a value of the low bit part of the bullet-screen score based on the second sorting score of the bullet-screen comment; and
obtaining the bullet-screen score of the bullet-screen comment based on the value of the high bit part and the value of the low bit part.

4. The method of any one of claims 1 to 3, wherein determining, based on the bullet-screen score, a sorting result of displaying the bullet-screen comment in the video, comprises:
sorting bullet-screen comments in descending order based on first sorting scores of bullet-screen scores, wherein
in response to two or more first sorting scores being equal, the sorting result of displaying the bullet-screen comments in the video is obtained by further sorting bullet-screen comments with an equal first sorting score in descending order according to second sorting scores of the bullet-screen scores.

5. The method of claim 4, the method further comprises:
displaying (S402), during playing the video, the bullet-screen comments in the video by selecting the bullet-screen comments in order according to the sorting result.

6. The method of any one of claims 1 to 5, wherein obtaining a second sorting score of the bullet-screen comment based on the sending time, comprises:
obtaining (S502) an auto-increment identifier and sending time of previous bullet-screen comment of target bullet-screen comment, the target bullet-screen comment being the bullet-screen comment for which the bullet-screen score is currently calculated;
calculating (S504) a duration from the sending time of the previous bullet-screen comment and the sending time of the target bullet-screen comment;
determining (S506) an auto-increment step based on the duration, the auto-increment step being positively correlated with the duration;
generating (S508) an auto-increment identifier of the target bullet-screen comment by adding the auto-increment identifier of the previous bullet-screen comment and the auto-increment step; and
determining (S510) the second sorting score based on the generated auto-increment identifier of the target bullet-screen comment.

7. The method of claim 6, wherein determining, based on the bullet-screen score, a sorting result for displaying the bullet-screen comment in the video, comprises:
sorting, in response to two or more first sorting scores being equal, bullet-screen comments with an equal first sorting score in descending order according to the auto-increment identifier.

8. An apparatus for sorting video bullet-screen comments, **characterized in that**, comprises:
a data obtaining module (602) configured to obtain sorting data of a bullet-screen comment in a video, the sorting data comprising playback progress time of the video and sending time of the bullet-screen comment;
a score calculation module (604) configured to obtain a first sorting score of the bullet-screen comment based on the playback progress time and obtain a second sorting score of the bullet-screen comment based on the sending time;
a total score calculation module (606) configured to obtain a bullet-screen score based on at least one of the first sorting score and the second sorting score; and
a sorting result module (608) configured to determine, based on the bullet-screen score, a sorting result of displaying the bullet-screen comment in the video.

9. The apparatus of claim 8, wherein the first sorting score is negatively correlated with the playback progress time and the second sorting score is positively correlated with the sending time of the bullet-screen comment.

10. The apparatus of claim 8 or claim 9, wherein the bullet-screen score of the total score calculation module comprises a high bit part and a low bit part spliced together, and the total score calculation module comprises:
a high bit unit (702) configured to determine a value of the high bit part of the bullet-screen score based on the first sorting score of the bullet-screen comment; and
a low bit unit (704) configured to determine a value of the low bit part of the bullet-screen score based on the second sorting score of the bullet-screen comment; and
the total score calculation module is further configured to obtain the bullet-screen score of the bullet-screen comment based on the value of the high bit part determined by the high bit unit and the value of the low bit part determined by the low bit unit.

11. The apparatus of any one of claims 8 to 10, wherein determining, based on the bullet-screen score, a sorting result of displaying the bullet-screen comment in the video, comprises:
sorting bullet-screen comments in descending order based on first sorting scores of bullet-screen scores, wherein
in response to two or more first sorting scores being equal, the sorting result of displaying the bullet-screen comments in the video is obtained by further sorting bullet-screen comments with an equal first sorting score in descending order according to second sorting scores of the bullet-screen scores.

12. The apparatus of claim 11, further comprises:
a bullet-screen comment display module (802) configured to display, during playing the video, the bullet-screen comments in the video by selecting the bullet-screen comments in order according to the sorting result.

13. The apparatus of any one of claims 8 to 12, wherein the score calculation module comprises:
a sending time determination unit (902) configured to obtain an auto-increment identifier and sending time of previous bullet-screen comment of target bullet-screen comment, the target bullet-screen comment being the bullet-screen comment for which the bullet-screen score is currently calculated;
a duration determination unit (904) configured to calculate a duration from the sending time of the previous bullet-screen comment and the sending time of the target bullet-screen comment;
a step determination unit (906) configured to determine an auto-increment step based on the duration, the auto-increment step being positively correlated with the duration;
an auto-increment identifier generation unit (908) configured to generate an auto-increment identifier of the target bullet-screen comment by adding the auto-increment identifier of the previous bullet-screen comment and the auto-increment step; and
a second score calculation unit (910) configured to determine the second sorting score based on the generated auto-increment identifier of the target bullet-screen comment.

14. The apparatus of claim 13, wherein determining, based on the bullet-screen score, a sorting result for displaying the bullet-screen comment in the video, comprises:
sorting, in response to two or more first sorting scores being equal, bullet-screen comments with an equal first sorting score in descending order according to the auto-increment identifier.

15. A server, comprising:
at least one processor; and
a memory for storing instructions executable by the at least one processor;
wherein the at least one processor is configured to execute the instructions to implement the method for sorting video bullet-screen comments of any one of claims 1 to 7.
